Europäisches Patentamt

European Patent Office

Office européen des brevets

(11) Publication number: **0 080 439**
**B1**

# EUROPEAN PATENT SPECIFICATION

(45) Date of publication of patent specification: **20.03.85**

(51) Int. Cl.⁴: **F 02 B 19/14**

(21) Application number: **82830277.8**

(22) Date of filing: **09.11.82**

(54) **Internal combustion engine with compression ignition and with a precombustion chamber, particularly for motor vehicles.**

| | |
|---|---|
| (30) Priority: **20.11.81 IT 6851181** | (73) Proprietor: **FIAT AUTO S.p.A.**<br>**Corso Giovanni Agnelli 200**<br>**I-10135 Torino (IT)** |
| (43) Date of publication of application:<br>**01.06.83 Bulletin 83/22** | (72) Inventor: **Burgio di Aragona, Antonio**<br>**Strada Santa Brigida 64/14**<br>**I-10024 Moncalieri (Torino) (IT)** |
| (45) Publication of the grant of the patent:<br>**20.03.85 Bulletin 85/12** | (74) Representative: **Buzzi, Franco et al**<br>**c/o Jacobacci-Casetta & Perani S.p.A. Via Alfieri,**<br>**17**<br>**I-10121 Torino (IT)** |
| (84) Designated Contracting States:<br>**DE FR GB** | |
| (56) References cited:<br>**FR-A-2 404 107**<br>**US-A-1 984 836** | |

Courier Press, Leamington Spa, England.

## Description

The present invention generally relates to internal combustion engines with compression ignition used in the motor vehicle field.

In particular, the invention relates to a diesel cycle engine of the type comprising at least one cylinder having a head with a hole in which a hollow insert is housed, the interior of the insert defining a pre-combustion chamber which communicates at its lower end with the cylinder, the head having a bearing seat surrounding the said hole and the insert being provided at its upper end with retaining means cooperating with the said bearing seat, and a fuel injector which extends into the upper end of the precombustion chamber and has a front stop part which axially retains the said retaining means for the insert against the bearing seat of the head.

Conventionally, in engines of this type, the insert defining the precombustion chamber has at its upper end an annular outer flange with flat end faces. The lower face, which forms a sharp edge with the remaining part of the outer surface of the insert, bears against the said bearing seat of the head, while the upper face is in direct contact with the front stop part of the fuel injector. An arrangement of this type is illustrated for example in U.K Patent No. 645,221.

With this solution there is the disadvantages that, due to the effect of considerable thermal shocks on the insert during use, premature fractures may easily occur in the zone of connection between the end flange of the remaining part of the insert. Moreover, this type of solution is totally unsuitable to the formation of the insert in ceramic materials use of which is certainly preferable to that of conventional metal materials given their better behaviour under conditions of intense thermal shock.

The object of the present invention is to avoid the disadvantages mentioned above and to form an internal combustion engine of the type defined at the beginning in which the insert defining the precombustion chamber is free from zones of weakening so as to ensure a considerable increase in the working life of the engine, and may to advantage be formed by making use of the ceramic material.

According to the invention, this object is achieved by virtue of the fact that the said retaining means of the insert comprise an annular outer rib projecting radially from the upper end of the insert and having a convex circumferential surface which is joined to the outer surface of the insert, and a retaining ring having a concave internal circumferential surface in which the said annular rib of the insert positively engages, the said retaining ring being provided with flat end faces bearing respectively against the said bearing seat of the head and the said front stop part of the injector.

By virtue of this solution the insert defining the precombustion chamber of the engine has a strength and a shock resistance which is considerably greater than that of conventional inserts although being simple and economical to manufacture.

The form of the outer annular rib lends itself extremely well to the use of ceramic materials for the formation of the insert.The shape of the contacts surfaces between the retaining ring and the annular rib of the insert is such that, in use, the part for retaining the latter with respect to the head of the cylinder is substantially solely subjected to radial or circumferential compression forces.

The retaining ring may be continuous or may be a resilient split ring.

In order to facilitate assembly, the retaining ring is preferably formed in two separate circular portions superimposed on each other.

According to the invention, the upper end face of the retaining ring is offset upwardly with respect to the upper end of the insert. Thus direct contact between the insert and the front stop part of the fuel injector is avoided.

According to a preferred embodiment of the invention, the internal concave surface of the retaining ring has a transverse section with a broken linear shape defined by two flat sections forming an obtuse angle between them and disposed in tangential contact on opposite sides of the circumferential surface of the annular rib of the insert.

The annular rib may have a substantially circular or triangular profile in transverse section.

Further characteristics and advantages of the invention will become clear in the course of the detailed description which follows with reference to the appended drawings, provided purely by way of non-limiting example in which:

Figure 1 is a schematic vertical sectional view of a part of an internal combustion engine according to a preferred embodiment of the invention,

Figure 2 illustrates a detail of Figure 1 on an enlarged scale,

Figure 3 is a perspective view of an enlarged scale of a detail of Figure 1,

Figure 4 illustrates a variant of Figure 2,

Figure 5 is an exploded perspective view of a detail of Figure 4 and

Figure 6 illustrates a variant of Figures 2 and 4.

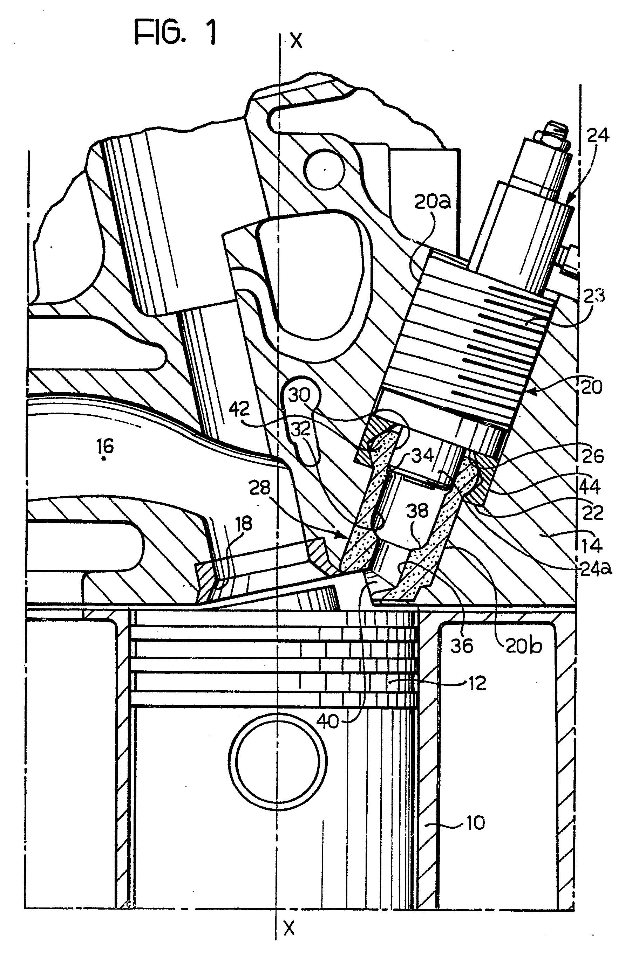

Figure 1 shows schematically part of the compression-ignition internal combustion engine for motor vehicles. The engine comprises a cylinder 10 in which a piston 12 is reciprocatingly slidable and a head 14 which closes the upper end of the cylinder 10.

In the head 14 there is formed an exhaust duct 16 for combustion gases forming, at its end facing the cylinder 10, a valve seat 18 for an exhaust valve not shown.

The head 14 is also formed with a through hole 20 the axis of which is inclined to the axis X—X of the cylinder 10 at an angle of about 20°. The hole 20 comprises an upper portion 20*a* of larger diameter and a lower portion 20*b* of smaller diameter opening into the upper part of cylinder 10. Between the lower end of the portion 20*a* and the upper end of the portion 20*b* an annular radial bearing shoulder 22 is defined.

In the upper portion 20*a* there is inserted and locked for example, by means of a screw threaded bush 23, a fuel injector 24. The lower end of the injector 24 indicated by 24*a*, forms an annular bearing shoulder 26 with the lower end of the bush 23.

In the lower part 20*b* of the hole 20 there is positively engaged, a tubular insert of ceramic material generally indicated 28. The interior of the insert 28 constitutes a precombustion chamber of the engine and comprises an upper substantially cylindrical chamber 30 in which the lower end 24*a* of the injector 24 is engaged, an intermediate chamber 32 with a diameter smaller than that of the upper chamber 30 and connected thereto by means of a rounded frusto-conical portion 34, and a lower chamber 36. The lower chamber 36 has a smaller diameter than that of the intermediate chamber 32 and is connected thereto by way of a rounded frusto-conical portion 38, and communicates at its lower end with an inclined outlet duct 40 which opens into the upper part of the cylinder 10. The outlet duct 40 faces towards the axis X—X of the cylinder 10 and is inclined at about 120°C to the median axis of the insert 28.

In the side wall of the insert 28 there may be formed, in correspondence with the lower part of the intermediate chamber 32, a radial through hole for the insertion of a preheating glow plug, not shown in the drawings.

The upper end of the insert 28 extends into the lower zone of the part 20*a* of the hole 20 beneath the bush 23, and, according to the invention, has an annular rib 42 projecting radially outwardly and having a convex circumferential surface which is connected to the remaining outer surface of the insert 28. In the embodiment illustrated in Figures 1, 2, and 4 this circumferential surface is curved, and the annular rib 42 has a transverse section with a substantially semicircular profile. However, this circumferential surface may have a different form, being for example formed in two slightly curved sections converging outwardly or in two flat sections defining a triangular profile in transverse section, as illustrated in detail in Figure 6.

An annular retaining ring generally indicated 44 is inserted in the lower end of the part 20*a* of the hole 20 and is locked axially between the annular shoulder 22 and the bush 23. As illustrated in detail in Figures 2 and 3, the retaining ring 44, which is preferably of metal, has a flat outer circumferential surface 46, two flat end faces, an upper one 48 and a lower one 50 respectively, and a concave internal circumferential surface. In the example illustrated this concave circumferential surface has a broken linear profile in transverse section defined by two flat sections, another upper one 52 and a lower one 54 respectively forming an obtuse angle between them. With this configuration the retaining ring 44 has a substantially K shape in transverse section as is clearly seen in Figure 2.

The flat upper section 52 has a length greater than that of the lower section 54 and forms an angle of the order of 15° with the axis of the ring 44. The angle between the lower section 54 and the axis of the ring 44 is, however, of the order of 30°.

According to the embodiment illustrated in Figures 1 to 3, the retaining ring 44 has the configuration of a resilient split ring and is formed in a single piece. As stated previously, this ring 44 is inserted in the lower part 20*a* of the hole 20 at its end faces 48, 50 bear frontally against the annular shoulders 26 and 22 respectively. The recess formed by the internal circumferential surface of the ring 44 receives the outer annular rib 42 of the insert 28 and the sections 52 and 54 are disposed in tangential contact on opposite sides of the outer circumferential surface of this rib 42. Since, as stated above, the upper section 52 is longer than the lower section 54, the upper face of the insert 28, indicated by 56 is spaced from the lower end of the bush 23, that is from the annular shoulder 26.

Thus correct axial locking of the insert 28 in the hole 20 is achieved with the advantage that this insert 28 is subjected in use, by virtue of the configuration of the retaining ring 24 and the annular rib 42, in practice, solely to radial tensions and circumferential compression. Moreover the particular form of the annular rib 42 ensures the elimination, in the zone of retention of the insert 28, of any zone of weakening which could cause premature fractures.

The variant of the retaining ring illustrated in Figures 4, 5, and 6 is generally similar to the embodiment described previously, and only the differences will be described in detail, the same reference numerals being used for identical or similar parts.

According to this variant, the retaining ring generally indicated 58 is constituted by two separate split rings superimposed on each other, and indicated respectively 60 and 62. The upper ring 60 has a cross section in the general form of a right angled triangle, the larger cathetus of which defines the outer circumferential surface 46 of the ring 58. The smaller cathetus of the ring 60 defines the upper end face 48 of the ring 58, while the upper portion of its hypotenuse defines the flat upper section 52 in contact with the upper part of the annular rib 42 of the insert 28.

The lower ring 62 has a transverse section in the form of a generally isosceles triangle the base of which defines the lower end face 50 of the retaining ring 58. One of the two equal sides of the triangle defines the lower section 54 in contact with the lower part of the annular rib 42, while the remaining side, indicated 64, bears against the lower part of the hypotenuse 52. In practice the retaining ring 58 has a shape in cross section which is identical to that of the retaining ring 44 described above, but has the advantage over the latter of being easier to apply to the insert 28 during assembly of the engine.

According to another variant of the invention not illustrated in the drawings, the retaining ring may be constituted by two distinct semi-circular portions facing each other, or again by a single continuous element. These solutions correspond in practice to a configuration similar to that of the retaining ring 44 illustrated in Figure 3, with two diametrically opposed splits and without any split respectively.

Naturally, the principle of the invention remaining the same, the details of construction and the embodiments may be varied widely with respect to that described and illustrated, without thereby departing from the scope of the present invention.

Thus, for example, the outer convex surface of the annular rib 42 and the internal concave surface of the retaining ring 44 or 58 could have different profiles from those illustrated and described, and also similar complementary forms. These surfaces might for example both be curved, like that of the rib 42 illustrated in Figures 1, 2 and 4, or both might have a broken linear profile with a shape different from that illustrated in Figure 6, for example, with right angles at the vertices.

Moreover, it is clear that the invention also applies to the case in which the insert 28 is formed of a conventional metal material instead of ceramic material, and to the case in which the precombustion chamber defined by the cavity of the insert 28 has different configuration from that illustrated.

## Claims

1. Internal combustion engine with compression ignition, of the type comprising at least one cylinder having a head with a hole housing a hollow insert the cavity of which defines a precombustion chamber which communicates at its lower end with the cylinder, the head having a bearing seat surrounding the said hole and the insert being provided at its upper end with retaining means cooperating with the said bearing seat, and a fuel injector which extends into the upper end of the precombustion chamber and has a front stop part which axially retains the said means for retaining the insert against the bearing seat of the head characterised in that the said retaining means comprise an annular outer rib (42) projecting radially from the upper end of the insert (28) and having a convex circumferential surface which is connected to the outer surface of the insert (28) and a retaining ring (44, 58) having an internal concave circumferential surface in which the said outer annular rib (42) of the insert (28) is positively engaged, the said retaining ring (44, 58) being provided with flat end faces (50, 48) bearing respectively against the said bearing seat (22) of the head (14) and against the front stop part (26) of the injector (24).

2. Engine according to Claim 1, characterised in that the retaining ring (44, 58) is a resilient split ring.

3. Engine according to Claim 1, characterised in that the retaining ring is a continuous ring.

4. Engine according to Claim 1 or Claim 2, characterised in that the retaining ring (58) is formed by two separate circular elements (60, 62) superimposed on each other.

5. Engine according to Claim 1, characterised in that the retaining ring is formed from two distinct semi-circular elements facing each other.

6. Engine according to any of Claim 1 to 5, characterized in that the upper end face (48) of the retaining ring (44, 58) is displaced upwardly with respect to the upper end face (56) of the insert (28).

7. Engine according to Claim 1, characterised in that the internal concave surface of the retaining ring (44, 58) has a broken linear profile in transverse section defined by two flat sections, an upper and a lower respectively (52, 54) forming together an obtuse angle and disposed in tangential contact with, and on opposite sides of, the outer circumferential surface of the annular rib (42) of the insert (28).

8. Engine according to Claim 7, characterised in that the outer annular rib (42) of the insert (28) has a substantially semi-circular profile in cross-section.

9. Engine according to Claim 7, characterised in that the outer annular rib (42) of the insert (28) has a substantially triangular profile in cross section.

10. Engine according to Claim 7, characterised in that the upper flat section (52) is longer than the lower flat section (54).

11. Engine according to Claim 7, characterised in that the angle between the said upper flat section (52) and the axis of the retaining ring (44, 58) is of the order of 15°.

12. Engine according to Claim 11, characterised in that the angle between the said lower flat section (54) and the axis of the retaining ring (44, 58) is of the order of 30°.

13. Engine according to Claims 4 and 7, characterised in that one of the two circular elements (60) forming the retaining ring (58) has a cross section in the general form of a right angled triangle the hypotenuse (52) of which defines the said upper flat section (52) and the other of the two circular elements (62) forming the retaining ring (58) has a cross section in the general form of an isosceles triangle one of the equal sides of which defines the said flat lower section (54) and the other of the equal sides of which (64) faces the lower part of the said hypotenuse (52).

14. Engine according to any one of the preceding claims, characterised in that the retaining ring (44, 58) is of metal.

15. Engine according to one or more of the preceding claims, characterised in that the insert (28) is of ceramic material.

**Patentansprüche**

1. Dieselbrennkraftmaschine

mit wenigstens einem Zylinder, in dessen Zylinderkopf eine Ausnehmung gebildet ist, in welcher eine hohles Einsatzteil aufgenommen ist, dessen Hohlraum eine Vorkammer bildet, die an ihrem unteren Ende mit dem Zylinder in Verbindung steht, wobei der Zylinderkopf eine die genannte Ausnehmung umgebende Largerstelle bildet und das Einsatzteil an seinem oberen Ende mit dieser Lagerstelle zusammenwirkende Halterungsmittel aufweist,

sowie mit einer Kraftstoffeinspritzdüse, die in den oberen Endbereich von Vorkammer hineinragt und die ein vorderes Anschlagteil besitzt, das die Halterungsmittel zur Halterung des Einsatzteils in axialer Richtung gegen die Lagerstelle des Zylinderkopfes hält,

dadurch gekennzeichnet,

daß die Halterungsmittel folgende Teile umfassen:

eine ringförmige Rippe (42), di von dem oberen Ende des Einsatzteils (28) radial hervorsteht und die eine konvexe Umfangsfläche besitzt, welche mit der Außenfläche des Einsatzteils (28) in Verbindung steht,

sowie einen Haltering (44, 58) mit einer konkaven inneren Umfangsfläche, mit der die äußere ringförmige Rippe (42) des Einsatzteils (28) formschlüssig em Eingriff steht, wobei der Haltering (44, 58) flache Stirnflächen (50, 48) besitzt, mit denen er an der Lagerstelle (22) des Zylinderkopfes (14) bzw. an dem vorderen Anschlagteil (26) der Kraftstoffeinspritzdüse anliegt.

2. Dieselbrennkraftmaschine nach Anspruch 1, dadurch gekennzeichnet, daß der Haltering (44, 58) ein aufgeschnittener federnder Ring ist.

3. Dieselbrennkraftmaschine nach Anspruch 1, dadurch gekennzeichnet, daß der Haltering ein durchgehender Ring ist.

4. Dieselbrennkraftmaschine nach Anspruch 1 oder 2, dadurch gekennzeichnet, daß der Haltering (58) von getrennten übereinanderliegenden ringförmigen Elementen (60, 62) gebildet ist.

5. Dieselbrennkraftmaschine nach Anspruch 1, dadurch gekennzeichnet, daß der Halterungsmittel von zwei einander gegenüberliegenden getrennten Elementen gebildet sind.

6. Dieselbrennkraftmaschine nach einem der Ansprüche 1 bis 5, dadruch gekennzeichnet, daß die obere Stirnfläche (48) des Halterings (44, 58) gegenüber der oberen Stirnfläche des Einsatzteils (28) nach oben versetzt ist.

7. Dieselbrennkraftmaschine nach Anspruch 1, dadurch gekennzeichnet, daß die konkave innere Fläche des Halterings (44, 58) ein aus Geradenstücken bestehendes Querschnittsprofil mit einem oberen und einem unteren flachen Abschnitt besitzt, die einen stumpfen Winkel einschließen und die die äußere Umfangsfläche der ringförmigen Rippe (42) des Einsatzteils (28) an entgegengesetzten Seiten tangieren.

8. Dieselbrennkraftmaschine nach Anspruch 7, dadurch gekennzeichnet, daß die äußere ringförmige Rippe (42) des Einsatzteils (28) ein im wesentlichen halbkreisförmiges Profil besitzt.

9. Dieselbrennkraftmaschine nach Anspruch 7, dadurch gekennzeichnet, daß die äußere ringförmige Rippe (42) des Einsatzteils (28) ein im wesentlichen dreieckförmiges Profil besitzt.

10. Dieselbrennkraftmaschine nach Anspruch 7, dadurch gekennzeichnet, daß der obere flache Abschnitt (52) länger ist als der untere flache Abschnitt (52).

11. Dieselbrennkraftmaschine nach Anspruch 7, dadurch gekennzeichnet, daß der Winkel zwischen dem oberen flachen Abschnitt (52) und der Achse des Halterings (44, 58) etwa 15° beträgt.

12. Dieselbrennkraftmaschine nach Anspruch 7, dadurch gekennzeichnet, daß der Winkel zwischen dem unteren flachen Abschnitt (54) und der Achse des Halterings (44, 58) etwa 30° beträgt.

13. Dieselbrennkraftmaschine nach Anspruch 4 und 7, dadurch gekennzeichnet, daß eines der beiden den Haltering (58) bildenen Elemente (60) einen Querschnitt in Form eines rechtwinkligen Dreiecks besitzt, dessen Hypotenuse den oberen flachen Abschnitt (52) begrenzt, und daß das andere der beiden den Haltering (58) bildenden Elemente (62) einen Querschnitt in Form eines gleichschenkligen Dreiecks besitzt, wobei einer der gleichen Schenkel den unteren flachen Abschnitt (54) begrenzt und der andere der gleichen Schenkel (64) dem unteren Teil der Hypotenuse (52) gegenüberliegt.

14. Dieselbrennkraftmaschine nach einem oder mehreren der vorhergehenden Ansprüche, dadurch gekennzeichnet, daß der Haltering (44, 58) aus Metall besteht.

15. Dieselbrennkraftmaschine nach einem oder mehreren der vorhergehenden Ansprüche, dadurch gekennzeichnet, daß das Einsatzteil (28) aus einem keramischen Werkstoff besteht.

**Revendications**

1. Moteur à combustion interne avec allumage par compression du type comprenant au moins un cylindre avec une tête comprenant un trou dans lequel est enfermée une pièce encastrée creuse dont la cavité délimite une préchambre de combustion qui communique, par son extrémité inférieure, avec le cylindre, la tête comprenant un siège d'appui entourant ledit trou et la pièce encastrée étant prévue à son extrémité supérieure avec un dispositif de retenue coopérant avec ledit siège d'appui et un injecteur de combustible qui pénètre dans l'extrémité supérieure de la préchambre de combustion et qui comporte une partie d'arrêt avant qui maintient axialement ledit dispositif de retenue de la pièce encastrée contre le siège d'appui de la tête, caractérisé en ce que ledit dipositif de retenue comporte une nervure extérieure annulaire (42) en saillie radiale à l'extrémité supérieure de la pièce encastrée (28) et ayant une surface circonférentielle convexe qui est reliée à la surface extérieure de la pièce encastrée (28) et une bague de retenue (44, 58) ayant une surface circonférentielle concave inférieure dans laquelle est engagée positivement ladite nervure annulaire extérieure (42) de la pièce encastrée (28), ladite bague de retenue (44, 58) comportant des faces d'extrémité planes (50, 48) s'appuyant respectivement contre ledit siège d'appui (22) de la tête (14) et contre la partie d'arrêt avant (26) de l'injecteur (24).

2. Moteur selon la revendication 1, caractérisé en ce que la bague de retenue (44, 58) est une bague fendue élastique.

3. Moteur selon la revendication 1, caractérisé en ce que la bague de retenue est une bague continue.

4. Moteur selon la revendication 1 ou la revendication 2, caractérisé en ce que la bague de retenue (58) est formée de deux éléments circulaires séparés (60, 62) superposés l'un sur l'autre.

5. Moteur selon la revendication 1, caractérisé en ce que la bague de retenue est formée de deux éléments semi-circulaires distincts disposés face à face.

6. Moteur selon l'une quelconque des revendications 1 à 5, caractérisé en ce que la face d'extrémité supérieure (48) de la bague de retenue (44, 58) est décalée vers le haut par rapport à la face d'extrémité supérieure (56) de la pièce encastrée (28).

7. Moteur selon la revendication 1, caractérisé en ce que la surface concave extérieure de la bague de retenue (44, 58) a un profil linéaire interrompu dans la section transversale, défini par deux sections planes, respectivement une section supérieure et une section inférieure (52, 54) formant ensemble un angle obtus et disposé en contact tangentiel avec les côtés opposés de la surface circonférentielle extérieure de la nervure annulaire (42) de la pièce encastrée (28).

8. Moteur selon la revendication 7, caractérisé en ce que la nervure annulaire extérieure (42) de la pièce encastrée (28) a un profil semi-circulaire en section transversale.

9. Moteur selon la revendication 7, caractérisé en ce que la nervure annulaire extérieure (42) de la pièce encastrée (28) a un profil triangulaire en section transversale.

10. Moteur selon la revendication 7, caractérisé en ce que la section plane supérieure (52) est plus longue que la section plane inférieure (54).

11. Moteur selon la revendication 7, caractérisé en ce que l'angle entre la section plane supérieure (52) et l'axe de la bague de retenue (44, 58) est de l'ordre de 15°.

12. Moteur selon la revendication 11, caractérisé en ce que l'angle entre ladite section plane inférieure (54) et l'axe de la bague de retenue (44, 58) est de l'ordre de 30°.

13. Moteur selon les revendications 4 et 7, caractérisé en ce que l'une des deux éléments circulaires (60) formant la bague de retenue (58) a une section transversale en forme générale de triangle rectangle dont l'hypothénuse (52) définit ladite section plane supérieure (52) l'autre des deux éléments circulaires (62) formant la bague de retenue (58) ayant une section transversale en forme générale d'un triangle isocèle dont l'un des côtés égaux définit ladite section inférieure plane (54) et dont l'autre des côtes égaux (64) est en face de la partie inférieure de ladite hypothénuse (52).

14. Moteur selon l'une quelconque des revendications précédentes, caractérisé en ce que la bague de retenue (44, 58) est en métal.

15. Moteur selon l'une ou plusieurs des revendications précédentes, caractérisé en ce que la pièce encastrée (28) est faite d'une matière céramique.

FIG. 1